# EUROPEAN PATENT SPECIFICATION

(11) **EP 0 445 301 B1**
(45) Date of publication and mention of the grant of the patent: **24.08.1994**
(21) Application number: 90913871.1
(22) Date of filing: 25.09.1990
(51) Int. Cl.: C01B 33/12, C04B 38/00, C04B 14/04

(54) **COMPOSITE PRIMARY PARTICLE OF NONCRYSTALLINE SILICA, COMPOSITE SECONDARY PARTICLE OF NONCRYSTALLINE SILICA, SHAPED FORM THEREOF AND PRODUCTION THEREOF**
PRIMÄR-, SEKUNDÄRVERBUNDTEILCHEN AUS NICHTKRISTALLINER KIESELSÄURE, DARAUS HERGESTELLTE FORMKÖRPER SOWIE DEREN HERSTELLUNG
PARTICULE PRIMAIRE COMPOSITE DE SILICE NON CRISTALLINE, PARTICULE SECONDAIRE COMPOSITE DE SILICE NON CRISTALLINE, FORME FA ONNEE OBTENUE PAR MOULAGE DE CES PARTICULES ET PRODUCTION DE TELLES PARTICULES ET DE TELLES FORMES

(30) Priority: 25.09.1989 JP 249637/89
(43) Date of publication of application: 11.09.1991
(73) Proprietor: KABUSHIKI KAISHA OSAKA PACKING SEIZOSHO, Osaka 556 (JP)
(72) Inventor: IKAWA, Kiyoshi, Gifu-shi Gifu 502 (JP); NAKAGAWA, Shinji, Gifu-shi Gifu 500 (JP)
(74) Representative: Weinhold, Peter, Dr.
(86) International application number: JP9001235
(87) International publication number: WO9104225

(56) References cited:
- DD-A- 153 107
- FR-A- 2 313 315
- JP-B- 6 158 436
- US-A- 4 230 765
- WORLD PATENTS INDEX LATEST Week 8438, Derwent Publications Ltd., London, GB; AN 84-235004 & JP-B-63 041 849 (OSAKA PACKING SEIZO) 19 August 1988
- PATENT ABSTRACTS OF JAPAN vol. 11, no. 229 (C-436)25 July 1987 & JP-A-62 041 712 ( KAWAI SEKKAI KOGYO ) 23 February 1987

## Description

The present invention relates to novel particles of amorphous silica composite material, secondary particles of said amorphous silica composite material, shaped bodies thereof and processes for producing them.

The present applicant previously has proposed: amorphous silica being shapable without use of a binder or the like and having an excellent lightweight property; particles of amorphous silica prepared by carbonating calcium silicate crystals and treating the reaction product with an acid, said particles retaining the shape of the starting calcium silicate crystals and having a crystalline appearance; secondary particles of amorphous silica composed of the above particles randomly three-dimensionally interlocked with one another; and shaped bodies thereof (JP-B-58,436/1986, 41,849/1988 and 41,850/1988 and US-A-4,230,765). However, these amorphous silica particles adsorb, e.g., water and organic materials such as dyes to an extent which is not always satisfactory.

On the other hand, the amorphous silica prepared by decomposing an aqueous solution of sodium silicate with hydrochloric acid, sulfuric acid or like acid or with carbon dioxide gas, namely the so-called silica gel of the wet process type, has an excellent adsorbing property, but suffers the drawbacks of lacking shapability and having a poor lightweight property.

It is an object of the present invention to provide novel particles of amorphous silica composite material having an excellent adsorbing property, a shapability and an outstanding lightweight property, secondary particles thereof and processes for preparing them.

It is another object of the invention to provide shaped bodies of novel particles of amorphous silica composite material which bodies are excellent in adsorbing property and in insulating properties, lightweight and high in strength, and shaped bodies of secondary particles thereof and processes for preparing them.

These and other objects of the present invention will become more apparent from the following description.

According to the present invention, there are provided:
Particles of amorphous silica composite material, characterized in that they are composed of (a) numerous granular amorphous silica particles randomly attached to (b) amorphous silica particles retaining the original shape of calcium silicate crystals which have been used as starting crystals; (said particles will sometimes be referred to as "primary particles" in the following);
secondary particles of amorphous silica composite material, characterized in that they are composed of said primary particles randomly three-dimensionally interlocked with one another;
shaped bodies of amorphous silica composite material, characterized in that they are composed of either or both of said primary particles and said secondary particles randomly three-dimensionally interlocked with one another; and
processes for preparing said primary particles, said secondary particles or said shaped bodies thereof.

The present inventors conducted research and found that particles of amorphous silica composite material composed of (a) granular amorphous silica particles randomly attached to (b) the particles of amorphous silica (namely those previously developed by applicant) which retain the original shape of the calcium silicate crystals which have been used as starting crystals and secondary particles thereof, are lightweight and have an excellent adsorbing property and a shapability, and that the shaped bodies formed of these primary or secondary particles are lightweight, satisfactory in strength and outstanding in insulating properties while retaining the excellent adsorbing property.

The present invention was accomplished on the basis of these novel findings.

The primary particles of amorphous silica composite material according to the invention are units constituting the secondary particles thereof and have a novel structure which is entirely unknown. The primary particles thereof have a unique structure in which, for example, numerous granular alkali silicate-derived amorphous silica particles having a particle size of usually about 5 to about 200 nm (about 50 to about 2,000 Å) are randomly attached to amorphous silica particles retaining the original shape of calcium silicate crystals used as the starting crystals, examples of usable calcium silicate crystals being crystals of natural or synthetic materials such as crystals of xonotlite, tobermorite, foshagite, gyrolite, wollastonite, α-dicalcium silicate hydrate, tricalcium silicate, hillebrandite, rohsenhanite, truscottite, reyerite, calcio-condrodite, kilchoanite, afwillite, quasi-crystalline calcium silicate (CSHₙ), etc. The foregoing amorphous silica particles retain the original chain structure of SiO₄ tetrahedrons constituting the skeleton construction of calcium silicate crystals used as the starting calcium crystals, and have configurations and dimensions substantially corresponding to the appearance and the dimensions of the original calcium silicate crystals. For example, the amorphous silica particles produced from strip-like crystals of calcium silicates such as crystals of xonotlite, foshagite, wollastonite, etc., have a strip-like shape dimensionally substantially equal to that of the crystals, and those formed from plate-like crystals of calcium silicates such as crystals of tobermorite, gyrolite, etc. have a plate-like shape dimensionally substantially equal to that of the crystals.

The granular amorphous silica particles attached to amorphous silica particles derived from calcium silicate are rarely separated even when dispersed by means of supersonic waves and are presumed, therefore, to be firmly united thereto by chemical bonds such as siloxane bonds.

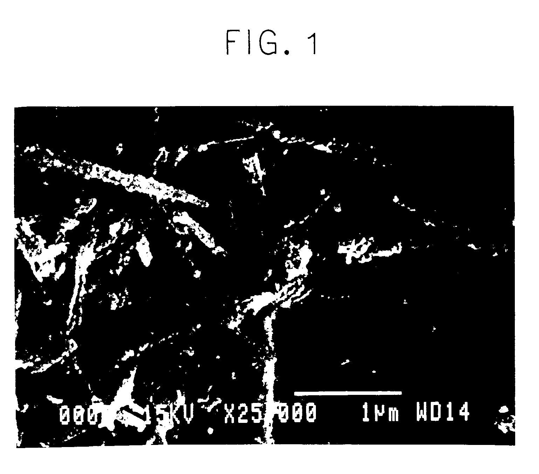

When observed under a scanning electron microscope, the primary particles of amorphous silica composite material of the invention are seen to have the foregoing structure. More specifically, this structure is apparent from, for example, Fig. 1. Fig. 1 is a scanning electron micrograph (magnification of 25,000 X) showing the primary particles of composite material of the invention prepared in Example 1. The photograph reveals that the primary particles are those in which numerous granular amorphous silica particles derived from sodium silicate are randomly attached to amorphous silica particles retaining the original shape of xonotlite crystals used as the starting crystals.

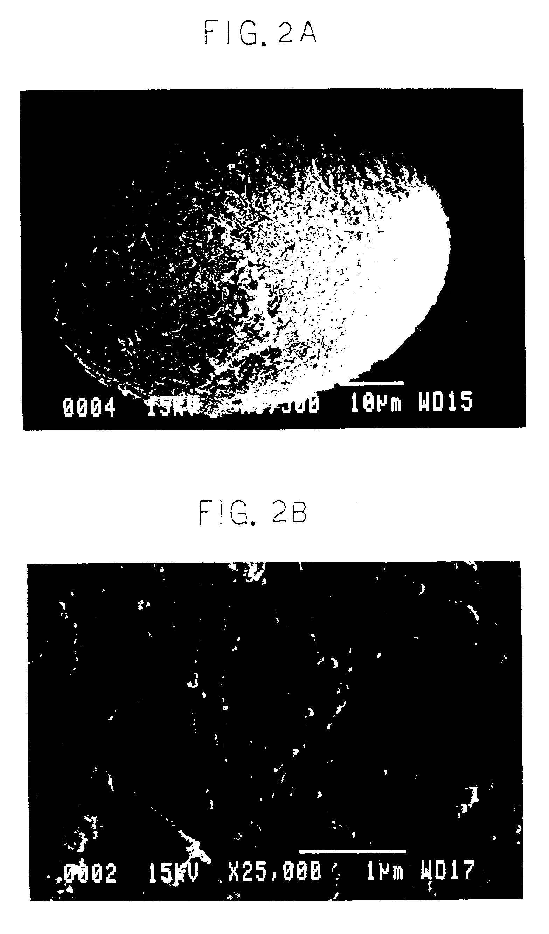

The secondary particles of amorphous silica composite material according to the invention are composed of the foregoing primary particles of amorphous silica composite material agglomerated and randomly three-dimensionally interlocked with one another, and are usually in the form of substantially globular particles having a diameter of about 10 to about 150 »m. The structure of the secondary particles can be seen by observing such particles under a scanning electron microscope. More specifically, the structure is clear from Figs. 2A and 2B, which are scanning electron micrographs of secondary particles of composite material according to the invention.

The primary particles of amorphous silica composite material of the present invention and the secondary particles thereof have the features that they are outstanding in the property of adsorbing water, organic materials and the like, particularly in hygroscopicity and dye-adsorbing property in an atmosphere of high humidity, and they have a shapability and an apparent specific gravity of about 0.1 g/cm³, i.e., are exceedingly lightweight.

The primary particles of amorphous silica composite material of the present invention or the secondary particles thereof can be suitably prepared by adding alkali silicate to an aqueous slurry of primary particles of calcium silicate crystals or secondary particles thereof, carbonating the slurry and treating the reaction product with an acid.

The secondary particles of calcium silicate crystals useful as the starting material can be prepared by subjecting a slurry of a siliceous material, a lime material and water to hydrothermal synthesis reaction with heating and stirring under pressure, thereby producing an aqueous slurry of secondary particles. The obtained aqueous slurry of secondary particles of calcium silicate crystals may be used directly as the starting material in preparing the secondary particles of composite material of the invention, or may be dried into powder which is reconstituted before use to provide an aqueous slurry as the starting material. The primary particles of calcium silicate crystals for use as the other starting material can be suitably prepared by crushing said secondary particles and dispersing the obtained finer particles by means of, e.g. supersonic waves. Other alternatives include powders prepared by pulverizing a material selected from a wide variety of natural or synthetic materials predominantly containing calcium silicate, such as autoclaved lightweight concrete (ALC), calcium silicate-based insulation materials, building materials, etc. A further option is the material prepared by, when required, heating a slurry of a siliceous material, a lime material and water to cause gelation, subjecting the gel to hydrothermal synthesis reaction and dispersing the obtained reaction product into primary particles.

Useful siliceous materials include, for example, natural or synthetic siliceous materials and industrial by-products containing usually at least 90% by weight of silica, and can be any of amorphous materials and crystalline materials, such as quartz, silicon dust, white carbon, etc. Useful lime materials are, for example, quick lime, slaked lime, cement, etc. which contain calcium as the main component. The ratio of siliceous material and lime material used in hydrothermal synthesis reaction is adjusted according to the molar ratio of the desired crystals of calcium silicate (CaO : SiO₂). A suitable amount of water is added to the siliceous material and the lime material, and the mixture is subjected to hydrothermal synthesis reaction with stirring when so required, giving calcium silicate crystals.

Subsequently alkali silicate is added to the aqueous slurry of primary or secondary particles of calcium silicate crystals thus obtained. A preferred amount of the alkali silicate used is such that the ratio by weight of SiO₂ in the alkali silicate to SiO₂ in said primary or secondary particles of calcium silicate crystals is about 20/80 to about 80/20. The alkali silicate may be forced into the reaction vessel containing the produced slurry of calcium silicate crystals. Examples of useful alkali silicates are sodium silicate, potassium silicate, lithium silicate, etc. The thus obtained aqueous slurry comprising the slurry of calcium silicate crystals and the alkali silicate admixed therewith is reacted with carbon dioxide gas for carbonation. The carbonation satisfactorily proceeds even at ambient temperature and atmospheric pressure as long as carbon dioxide gas is introduced. Preferably the carbonation is effected with stirring at elevated temperature and pressure, so that the carbonation is accelerated, making it possible to complete the carbonation in a short time. With the elevation of the temperature for carbonation, the particle size of the produced granular amorphous silica tends to increase in said range.

The alkali silicate can be mixed during the carbonation reaction.

The reaction product resulting from the carbonation is treated with an acid. The acid treatment is conducted to separate the calcium carbonate and alkali metal carbonate from the reaction product, whereby the product is converted into primary or secondary particles of amorphous silica composite material. Preferred acids are those which are capable of forming a calcium salt which can easily be removed by washing with water. Examples of desirable acids are hydrochloric acid, nitric acid, acetic acid, perchloric acid, sulfamic acid, benzenesulfonic acid, p-toluenesulfonic acid, 5-sulfosalicylic acid, 4-toluidinesulfamic acid, sulfanilic acid, mixtures of acids optionally selected from these acids, etc. After the acid treatment, the product is washed with water and dried, giving the primary or secondary particles of amorphous silica composite material according to the invention.

The primary particles of amorphous silica composite material according to the invention can be prepared also by crushing the secondary particles of composite material obtained above and dispersing the finer particles by means of supersonic waves.

The shaped bodies of amorphous silica composite material according to the invention are composed of either or both of primary and secondary particles of amorphous silica composite material three-dimensionally interlocked with one another.

The shaped bodies of amorphous silica composite material according to the invention have the features that they retain the original excellent adsorbing properties of the primary and secondary particles of amorphous silica composite material and they have a density of about 0.1 to about 0.4 g/cm³, a bending strength of at least 3 kgf/cm², namely a high strength although exceedingly lightweight, and outstanding insulating properties.

The shaped bodies of amorphous silica composite material according to the invention can be suitably prepared by, when desired, mixing the aqueous slurry of either or both of primary and secondary particles of amorphous silica composite material with additives, and shaping the slurry with dewatering by press molding, centrifugal molding, sheet molding or like techniques, followed by drying. Examples of useful additives are fibers, clays, cement, binders, surfactants, etc.

In forming the shaped body of amorphous silica composite material according to the invention, the secondary particles of amorphous silica composite material are preferably used in view of shapability, lightweight property, etc.

A preferred mode of the process for producing the shaped body comprises adding alkali silicate to the aqueous slurry of secondary particles of calcium silicate crystals, bringing the mixture into carbon dioxide gas, treating the same with an acid, shaping the mass and drying the shaped mass. A modified process is also available in which shaping is conducted immediately before or after bringing the mixture into contact with carbon dioxide gas. A further option is a process in which the carbonation and acid treatment are effected after immersion of the shaped body of secondary particles of calcium silicate crystals in alkali silicate.

The primary and secondary particles of amorphous silica composite material according to the invention have an excellent property of adsorbing water, organic materials and so on, so that they are suitable for use as, e.g. drying agents or adsorbing agents for dyeing and are also useful as adsorbent carriers, catalyst carriers, deodorants, fillers, pigments, abrasives or the like. The shaped bodies of amorphous silica composite material according to the invention also find use as building materials, since the shaped bodies not only have an excellent adsorbing property, but also are lightweight and high in strength, and are moreover outstanding in electrical insulating properties and heat insulating properties.

The present invention will be described below in more detail with reference to the following Examples and Comparison Examples. In the following Examples and Comparison Examples, the parts and percentages are all by weight and the properties were determined by the following procedures.
(a) Apparent specific gravity -- determined by the method according to JIS K 6220
(b) Density -- determined by the method according to JIS A 9510
(c) Test for hygroscopicity -- conducted by the method according to JIS Z 0701
(d) Bending strength -- determined by the method according to JIS A 9510
(e) Thermal conductivity -- determined by the plane plate-comparing method according to JIS A 1412
(f) Test for adsorption of organic substance -- A 100 ml conical flask equipped with a plug and charged with 100 ppm of an aqueous solution of methylene blue and 200 mg of a test sample was shaken in a constant-temperature bath maintained at 25°C for 24 hours and the contents of the flask were filtered. The absorbance of the filtrate was measured at 665 nm to determine the rate of decoloration.

The silica particles obtained in the Examples were subjected to X-ray diffraction and were confirmed to be amorphous.

### Example 1

Quick lime slaked in warm water was added to a ferro-silicon dust forcedly dispersed in water to achieve a CaO/SiO₂ molar ratio of 1.00. Water was further added so that the ratio of water to solids content was adjusted to 24, giving a starting slurry. The slurry thus obtained was placed into an autoclave equipped with an agitating element and was reacted under a saturated steam pressure of 15 kgf/cm² for 3 hours while rotating the agitating element at 100 rpm. The reaction gave an aqueous slurry of substantially globular secondary particles of calcium silicate crystals having a diameter of 10 to 30 »m and being composed of agglomerated xonotlite crystals. The slurry of the secondary particles was dispersed with ultrasonic waves to obtain an aqueous slurry of primary particles of xonotlite crystals.

Thereafter, the slurry obtained above (containing 50% SiO₂ (A) based on total solids content) was mixed with sodium silicate of JIS No. 3 (containing 29% SiO₂ (B) based on total solids content) so that the ratio of SiO₂ (A) to SiO₂ (B) in the shaped body was 1:1. Carbon dioxide gas was forced into the mixture while rotating the agitating element at 100 rpm, whereupon the mixture was reacted at 80°C and 2 kgf/cm² for 6 hours. The reaction product thus obtained was immersed in 3N hydrochloric acid for 1 hour, washed with water and dried at 100°C, whereby primary particles of amorphous silica composite material of the present invention were obtained. The photograph of Fig. 1 shows the primary particles as observed under a scanning electron microscope (25000 X). Fig. 1 confirmed that the primary particles were composed of granular amorphous silica particles having a particle size of 10 to 100 nm (100 to 1000 Å) which were attached to the surface of amorphous silica particles retaining the original needle-like shape of xonotlite crystals.

Table 1 shows the properties of the obtained primary particles of amorphous silica composite material of the invention.

**Table 1**

| | | |
|---|---|---|
| Apparent specific gravity (g/cm³) | | 0.10 |
| Amount of absorbed moisture (%) | Relative humidity (20%) | 2.9 |
| | Relative humidity (50%) | 5.1 |
| | Relative humidity (90%) | 24.8 |
| Rate of decoloration of methylene blue (%) | | 98 |

### Example 2

Silica stone was mixed with quick lime slaked in warm water to achieve a CaO/SiO₂ molar ratio of 1.00. Water was added thereto to adjust the ratio of water to the solids content to 12, giving a starting slurry. The slurry thus obtained was subjected to hydrothermal synthesis reaction in the same manner as in Example 1. The reaction gave an aqueous slurry of substantially globular secondary particles of calcium silicate crystals, i.e. agglomerated xonotlite crystals, having a particle size of 30 to 150 »m.

Sodium silicate of JIS No. 3 was added to the slurry to achieve the same ratio of SiO₂ (A) to SiO₂ (B) as in Example 1. Carbon dioxide gas was forced into the mixture while rotating the agitating element at 100 rpm, whereupon the mixture was reacted at 80°C and 2 kgf/cm² for 6 hours. The reaction product was immersed in hydrochloric acid, washed with water and dried at 100°C as done in Example 1, whereby secondary particles of amorphous silica composite material according to the invention were obtained. The secondary particles were observed under a scanning electron microscope and microscopically shown in Fig. 2A (1500 X, showing the secondary particles as a whole) and Fig. 2B (25000 X, a photograph showing the surface of the secondary particle enlarged). These figures confirmed that the secondary particles were substantially globular, 30 to 150 »m in particle size and composed of primary particles randomly three-dimensionally interlocked with one another, the primary particles being formed of granular amorphous silica particles 10 to 100 nm (100 to 1000 Å) in particle size attached to the surface of amorphous silica particles retaining the original strip-like shape of xonotlite crystals.

Table 2 shows the properties of the obtained secondary particles of amorphous silica composite material according to the invention.

**Table 2**

| | | |
|---|---|---|
| Apparent specific gravity (g/cm³) | | 0.11 |
| Amount of absorbed moisture (%) | Relative humidity (20%) | 3.6 |
| | Relative humidity (50%) | 5.4 |
| | Relative humidity (90%) | 35.9 |
| Rate of decoloration of methylene blue (%) | | 99 |

### Example 3

The product of carbonation reaction prepared in the same manner as in Example 2 was immersed in hydrochloric acid and washed with water, giving an aqueous slurry of secondary particles of amorphous silica composite material. To the slurry thus obtained were added glass fibers in an amount of 5% of the total solids content and the mixture was shaped by a press with dewatering into a mass measuring 300 x 300 x 25 mm. The mass was dried at 100°C, giving a shaped body of amorphous silica composite material of the invention having a density of 0.15 g/cm³. Observation under a scanning electron microscope confirmed that the shaped body was composed of the secondary particles of amorphous silica composite material randomly three-dimensionally interlocked with one another in the same manner as in Example 2.

Table 3 shows the properties of the obtained shaped body of amorphous silica composite material.

**Table 3**

| | | |
|---|---|---|
| Amount of absorbed moisture (%) | Relative humidity (20%) | 3.3 |
| | Relative humidity (50%) | 5.2 |
| | Relative humidity (90%) | 35.0 |
| Rate of decoloration of methylene blue (%) | | 99 |
| Bending strength (kgf/cm²) | | 4.9 |
| Thermal conductivity | | 0.036 |

In Table 3, the thermal conductivity was measured at an average temperature of 70°C.

### Comparison Example 1

Hydrothermal synthesis reaction, injection of carbon dioxide gas, immersion in an acid, washing with water and drying were conducted in the same manner as in Example 2 except that sodium silicate of JIS No. 3 was not used, giving substantially globular secondary particles of amorphous silica composite material having a crystalline appearance and a diameter of 30 to 150 »m. The secondary particles were observed under a scanning electron microscope and microscopically shown in Fig. 3 (25000 X, showing the surface of the secondary particle enlarged). The micrograph confirmed that the secondary particles were composed of primary particles of amorphous silica composite material which were randomly three-dimensionally interlocked with one another and which had retained the original strip-like shape of xonotlite crystals.

Table 4 shows the properties of the obtained secondary particles of amorphous silica having a crystalline appearance.

**Table 4**

| | | |
|---|---|---|
| Apparent specific gravity (g/cm³) | | 0.067 |
| Amount of absorbed moisture (%) | Relative humidity (20%) | 3.4 |
| | Relative humidity (50%) | 5.3 |
| | Relative humidity (90%) | 17.4 |
| Rate of decoloration of methylene blue (%) | | 73 |

### Comparison Example 2

Sodium silicate of JIS No.3 as used in Example 1 was diluted with water in an amount of 5 times the quantity of the sodium silicate used. Carbon dioxide gas was forced into the mixture while rotating the agitating element at 100 rpm, whereupon the mixture was reacted at 80°C and 2 kgf/cm² for 6 hours. The reaction product was washed with water and dried at 100°C, giving a silica gel of the wet process type.

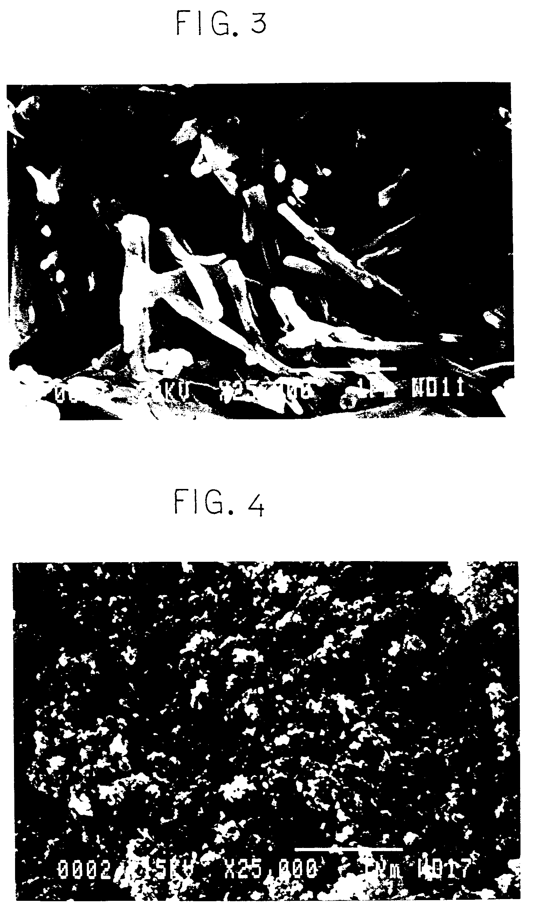

The wet process type silica gel thus obtained was observed under a scanning electron microscope and is microscopically shown in Fig. 4 (25000 X). Fig. 4 shows that the silica gel obtained is in the form of granules having a particle size of 10 to 100 nm (100 to 1000 Å).

Table 5 shows the properties of the obtained silica gel.

**Table 5**

| | | |
|---|---|---|
| Apparent specific gravity (g/cm³) | | 0.38 |
| Amount of absorbed moisture (%) | Relative humidity (20%) | 4.6 |
| | Relative humidity (50%) | 6.2 |
| | Relative humidity (90%) | 15.5 |
| Rate of decoloration of methylene blue (%) | | 90 |

To the silica gel were added glass fibers in an amount of 5% and water and the mixture was shaped by a press with dewatering into a mass measuring 300 x 300 x 25 mm. When the mass was dried at 100°C, the shaped mass was brittle and collapsed into powder.

## Claims

1. Particles of amorphous silica composite material, characterized in that they are composed of (a) numerous granular amorphous silica particles randomly attached to (b) amorphous silica particles retaining the original shape of calcium silicate crystals which have been used as starting crystals.

2. Particles according to claim 1 wherein the granular amorphous silica particles have a particle size of about 5 to about 200 nm (about 50 to about 2,000 Å).

3. A process for producing the particles according to claim 1, said process comprising adding alkali silicate to the aqueous slurry of particles of calcium silicate crystals, carbonating the mixture, and treating the reaction product with an acid.

4. A process according to claim 3 wherein the alkali silicate is at least one of sodium silicate, potassium silicate and lithium silicate.

5. Secondary particles of amorphous silica composite material characterized in that they are composed of said particles of claim 1 randomly three-dimensionally interlocked with one another.

6. Secondary particles of amorphous silica composite material according to claim 5 which are in the form of substantially globular particles having a diameter of about 10 to about 150 »m.

7. A process for producing the secondary particles according to claim 5, said process comprising the steps of adding alkali silicate to an aqueous slurry of secondary particles of clacium silicate crystals carbonating the mixture and treating the reaction product with an acid.

8. A process according to claim 7 wherein the alkali silicate is at least one of sodium silicate, potassium silicate and lithium silicate.

9. A shaped body of amorphous silica composite material, characterized in that the shaped body is composed of either or both of the particles of claim 1 and the secondary particles of claim 5 randomly three-dimensionally interlocked with one another.

10. A process for producing the shaped body of claim 9, said process comprising the steps of shaping an aqueous slurry of either or both of the particles of claim 1 and the secondary particles of claim 5, and drying the mass.

11. A process for producing the shaped body of claim 9, the process comprising the steps of adding alkali silicate to an aqueous slurry of secondary particles of calcium silicate crystals, contacting the mixture with carbon dioxide gas, treating the resulting product with an acid, shaping the mass and drying the shaped mass.

12. A process according to claim 11 wherein the alkali silicate is at least one of sodium silicate, potassium silicate and lithium silicate.

13. A shaped body produced by the process of claim 11.

## Patentansprüche

1. Teilchen eines Amorph-Kieselsäure("silica")-Verbundmaterials, dadurch gekennzeichnet, daß diese zusammengesetzt sind aus (a) zahlreichen körnigen amorphen Kieselsäure-Teilchen, die ungeordnet gebunden sind an (b) amorphe Kieselsäure-Teilchen, die die ursprüngliche Form von Kalziumsilikat-Kristallen, die als Ausgangskristalle verwendet worden sind, beibehalten haben.

2. Teilchen nach Anspruch 1, worin die körnigen amorphen Kieselsäure-Teilchen eine Teilchengröße von etwa 5 bis etwa 200 nm (etwa 50 bis etwa 2000 A) aufweisen.

3. Verfahren zur Herstellung der Teilchen nach Anspruch 1, welches die Zugabe von Alkalisilikat zu der wässrigen Aufschlämmung der Teilchen der Kalziumsilikat-Kristalle, Carbonisierung der Mischung und Behandlung des Reaktionsprodukts mit einer Säure umfaßt.

4. Verfahren nach Anspruch 3, worin das Alkalisilikat wenigstens eines von: Natriumsilikat, Kaliumsilikat und Lithiumsilikat ist.

5. Sekundäre Teilchen des Amorph-Kieselsäure-Verbundmaterials, dadurch gekennzeichnet, daß diese aus den genannten Teilchen nach Anspruch 1, die ungeordnet dreidimensional miteinander verbunden sind, zusammengesetzt sind.

6. Sekundäre Teilchen des Amorph-Kieselsäure-Verbundmaterials nach Anspsruch 5, die in Form von im wesentlichen kugelförmigen Teilchen mit einem Durchmesser von etwa 10 bis etwa 150 »m vorliegen.

7. Verfahren zur Herstellung der sekundären Teilchen nach Anspruch 5, welches die Schritte der Zugabe von Alkalisilikat zu einer wässrigen Aufschlämmung von sekundären Teilchen aus Kalziumsilikat-Kristallen, das Carbonisieren der Mischung und die Behandlung des Reaktionsprodukts mit einer Säure umfaßt.

8. Verfahren nach Anspruch 7, worin das Alkalisilikat wenigstens eines von: Natriumsilikat, Kaliumsilikat und Lithiumsilikat ist.

9. Formkörper aus Amorph-Kieselsäure-Verbundmaterial, dadurch gekennzeichnet, daß dieser zusammengesetzt ist aus einem oder beiden der Teilchen nach Anspruch 1 und den sekundären Teilchen nach Anspruch 5, die ungeordnet dreidimensional ineinander greifen.

10. Verfahren zur Herstellung der Formkörper nach Anspruch 9, welches die Schritte des Bildens einer wässrigen Aufschlämmung aus einem oder beiden der Teilchen nach Anspruch 1 und den sekundären Teilchen nach Anspruch 5 und das Trocknen der Masse umfaßt.

11. Verfahren zur Herstellung der Formkörper nach Anspruch 9, welches die Schritte der Zugabe von Alkalisilikat zu einer wässrigen Aufschlämmung der sekundären Teilchen aus Kalziumsilikat-Kristallen, das Kontaktieren der Mischung mit Kohlendioxid, die Behandlung des erhaltenen Produkts mit einer Säure, das Formen der Masse und das Trocknen der geformten Masse umfaßt.

12. Verfahren nach Anspruch 1, worin das Alkalisilikat wenigstens eines von: Natriumsilikat, Kaliumsilikat und Lithiumsilikat ist.

13. Formkörper, der nach dem Verfahren nach Anspruch 11 hergestellt worden ist.

## Revendications

1. Particules de matériau composite de silice amorphe, caractérisées en ce qu'elles comprennent (a) de nombreuses particules granulaires de silice amorphe attachées de façon aléatoire à (b) des particules de silice amorphe conservant la forme d'origine des cristaux de silicate de calcium qui ont été utilisés comme cristaux de départ.

2. Particules suivant la revendication 1, dans lesquelles les particules granulaires de silice amorphe ont une dimension d'environ 5 à environ 200 nm (environ 50 à environ 2.000 Â).

3. Procédé pour la production des particules suivant la revendication 1, ce procédé comprenant l'addition de silicate d'alcalin à la bouillie aqueuse de particules de cristaux de silicate de calcium, la carbonatation du mélange et le traitement du produit réactionnel avec un acide.

4. Procédé suivant la revendication 3, dans lequel le silicate d'alcalin est au moins un silicate parmi le silicate de sodium, le silicate de potassium et le silicate de lithium.

5. Particules secondaires de matériau composite de silice amorphe, caractérisées en ce qu'elles sont composées de ces particules suivant la revendication 1, emboîtées tridimensionnellement les unes dans les autres de façon aléatoire.

6. Particules secondaires de matériau composite de silice amorphe suivant la revendication 5, qui sont sous la forme de particules pratiquement globulaires ayant un diamètre d'environ 10 à environ 150 »m.

7. Procédé pour la production des particules secondaires suivant la revendication 5, ce procédé comprenant les étapes d'addition de silicate d'alcalin à une bouillie aqueuse de particules secondaires de cristaux de silicate de calcium, de carbonatation du mélange et de traitement du produit réactionnel avec un acide.

8. Procédé suivant la revendication 7, dans lequel le silicate d'alcalin est au moins un silicate parmi le silicate de sodium, le silicate de potassium et le silicate de lithium.

9. Corps façonné de matériau composite de silice amorphe, caractérisé en ce que le corps façonné est composé des particules suivant la revendication 1 et/ou des particules secondaires suivant la revendication 5, emboîtées tridimensionnellement les unes dans les autres de façon aléatoire.

10. Procédé pour la production du corps façonné suivant la revendication 9, ce procédé comprenant les étapes de façonnage d'une bouillie aqueuse des particules suivant la revendication 1 et/ou des particules secondaires suivant la revendication 5, et de séchage de la masse.

11. Procédé pour la production du corps façonné suivant la revendication 9, le procédé comprenant les étapes d'addition de silicate d'alcalin à une bouillie aqueuse de particules secondaires de cristaux de silicate de calcium, de mise en contact du mélange avec du dioxyde de carbone gazeux, de traitement du produit résultant avec un acide, de façonnage de la masse et de séchage de la masse façonnée.

12. Procédé suivant la revendication 11, dans lequel le silicate d'alcalin est au moins un silicate parmi le silicate de sodium, le silicate de potassium et le silicate de lithium.

13. Corps façonné produit par le procédé suivant la revendication 11.
